Europäisches Patentamt

European Patent Office

Office européen des brevets

(19)

(11) Numéro de publication: **0 335 791**
**A1**

## DEMANDE DE BREVET EUROPEEN

(12)

(21) Numéro de dépôt: 89400859.8

(22) Date de dépôt: 28.03.89

(51) Int. Cl.⁴: **A 47 L 15/23**
F 16 J 9/00, F 16 J 15/32

(30) Priorité: 01.04.88 FR 8804384

(43) Date de publication de la demande:
04.10.89 Bulletin 89/40

(84) Etats contractants désignés: **DE ES FR IT SE**

(71) Demandeur: **ESSWEIN S.A.**
**Route de Cholet**
**F-85002 Cholet (FR)**

(72) Inventeur: **Gailledrat, Benoit**
**THOMSON-CSF SCPI Cédex 67**
**F-92045 Paris La Défense (FR)**

**Guillemot, André**
**THOMSON-CSF SCPI Cédex 67**
**F-92045 Paris La Défense (FR)**

(74) Mandataire: **Phan, Chi Quy et al**
**THOMSON-CSF SCPI**
**F-92045 PARIS LA DEFENSE CEDEX 67 (FR)**

(54) Joint pour liquide dans un système ayant des parties tournantes et système ayant des parties tournantes muni d'un tel joint.

(57) Joint pour liquide dans un système ayant des parties tournantes, caractérisé en ce qu'il comprend un corps flexible annulaire (26), ouvert sur toute sa hauteur par une fente (27) et muni d'un pont élastique (40) reliant les deux bouts (41, 42) de ce corps séparés par cette fente.

FIG_2

EP 0 335 791 A1

## Description

### JOINT POUR LIQUIDE DANS UN SYSTEME AYANT DES PARTIES TOURNANTES ET SYSTEME AYANT DES PARTIES TOURNANTES MUNI D'UN TEL JOINT

La présente invention concerne un joint pour liquide dans un système ayant des parties tournantes, et système ayant des parties tournantes muni d'un tel joint.

Un système ayant des parties tournantes, tel que celui muni d'un bras tournant d'arrosage dans un lave-vaisselle comprend habituellement entre ces parties tournantes et des parties fixes, un joint pour liquide qui a pour principale fonction de limiter une fuite libre de liquide sous pression en circulation dans ce système sans gêner le mouvement de ces parties tournantes. En effet, dans un tel système, une étanchéité parfaite au liquide n'est pas exigée, cependant une fuite non contrôlée du diquide sous pression à travers la jointure des parties tournantes et des parties fixes, crée dans un lave-vaisselle non seulement un bruit désagréable et une abondante et gênante mousse, mais également une diminution appréciable du débit de liquide dans le bras tournant d'arrosage, par conséquent une baisse du rendement de fonctionnement de ce système.

Des joints connus pour limiter une fuite libre de liquide sous pression, à travers des jointures des parties tournantes et des parties fixes de tels systèmes tournants, ont souvent une structure entraînant soit leur usure rapide ou prématurée, soit leur coût onéreux ou leur montage compliqué.

La présente invention ayant pour but d'éviter ces inconvénients permet de réaliser un joint économique pour liquide dans un système ayant des parties tournantes, efficace en fonctionnement, facile à monter et non exposé à une usure rapide ou prématurée. Elle a également pour objet un système ayant des parties tournantes muni d'un tel joint, présentant un excellent rendement de fonctionnement et ne créant pas de bruit désagréable.

Selon l'invention, un joint pour liquide dans un système ayant des parties tournantes est caractérisé en ce qu'il comprend un corps flexible annulaire, ouvert sur toute sa hauteur par une fente et muni d'un pont élastique reliant les deux bouts de ce corps séparés par cette fente.

Pour mieux faire comprendre l'invention, on décrit ci-après un exemple de réalisation illustré par des dessins ci-annexés, dont

-la figure 1 représente une vue schématique partielle, en coupe verticale d'un système de circulation forcée de liquide dans un lave-vaisselle, réalisé selon l'invention et muni d'un bras tournant d'arrosage,

- la figure 2 représente, à une autre échelle, une vue schématique en coupe verticale d'une partie du système de la figure 1, montrant un joint pour liquide dand ce système,

-la figure 3 représente, à une autre échelle, une vue de dessus du joint pour liquide du système de la figure 1,

- la figure 4 représente une vue latérale du joint de la figure 3, et

-la figure 5 représente une vue en coupe suivant V-V du joint de la figure 3.

L'invention est applicable à un système ayant des parties tournantes telle qu'une pompe hydraulique, un arbre rotatif dans un milieu liquide, un système de circulation forcée de liquide.

Pour simplifier l'exposé de l'invention, un système de circulation forcée de liquide à bras tournant d'arrosage dans un lave-vaisselle est seul décrit ci-après.

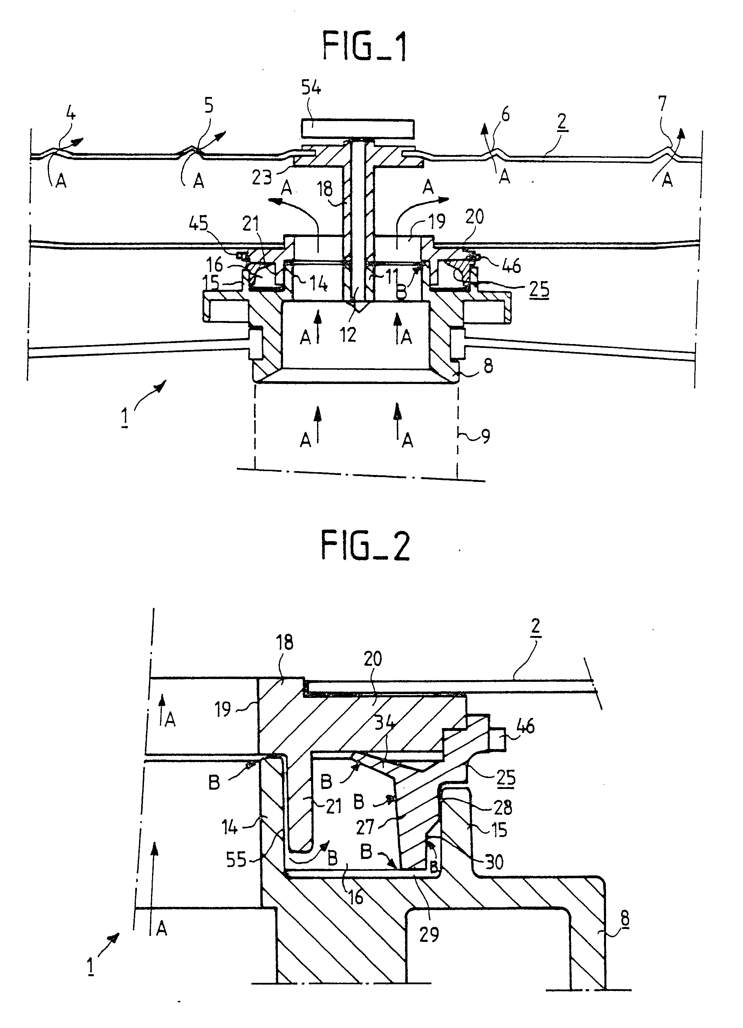

Dans un lave-vaisselle, la vaisselle disposée dans des paniers, non représentés, est lavée avec un liquide sous pression envoyé à travers un bras tournant d'arrosage par un système de circulation forcée de liquide 1, partiellement et schématiquement représenté dans les figures 1 et 2. Le liquide sale est évacué à l'extérieur, par le même système, à la fin des phases prédéterminées de fonctionnement de l'appareil.

Ce système de circulation forcé de liquide 1 comprend principalement un bras tournant d'arrosage 2, une pompe de recyclage d'un type connu, non représenté, qui aspire du liquide accumulé dans le fond de la cuve du lave-vaisselle et le refoule sous une pression prédéterminée suivant des flèches A dans le bras d'arrosage 2 pour le projeter à travers des trous 4, 5, 6, 7 sur la vaisselle à laver ou à rincer, et une pompe de vidange d'un type connu, non représentée qui évacue du liquide sale à chaque renouvellement prédéterminé de liquide et à la fin de la phase terminale de fonctionnement de l'appareil. Dans le système de circulation forcée de liquide 1, le bras tournant d'arrosage 2 comprend un support tubulaire fixe 8 monté bout à bout sur une tubulure de refoulement 9 (représentée en traits discontinus dans la figure 1) de la pompe de recyclage (non représentée). Le support tubulaire fixe 8 est pourvu dans son extrémité opposée à celle en contact avec la tubulure de refoulement 9 de la pompe de recyclage, d'une part d'un moyeu central 11 maintenu en position par des bras radiaux et portant un axe de rotation 12 pour le bras tournant d'arrosage 2, et d'autre part, de deux rebords axiaux circulaires saillants espacés concentriques 14, 15 définissant entre eux une rainure circulaire 16. Le bras tournant d'arrosage 2 comprend dans sa partie centrale un moyeu 18 dont l'alésage est destiné à recevoir l'axe de rotation 12. Le moyeu 18 du bras tournant d'arrosage 2 comprend à son extrémité adjacente au support tubulaire fixe 8 un bout tubulaire 19 muni d'une collerette radiale circulaire 20 sur laquelle est fixé un joint pour liquide 25 et d'un rebord axial circulaire saillant 21 en emboîtement dans la rainure circulaire 16 du support tubulaire 8 et créant avec le rebord adjacent 14 de ce support 8, une barrière avec un interstice circulaire en chicane 55, entre le joint pour liquide 25 et le courant de liquide sous pression représenté par des flèches A envoyé par la pompe de recyclage, et à son extrémité opposée un bout fermé 23.

Le joint pour liquide 25 comprend un corps flexible annulaire 26 ouvert sur toute sa hauteur par une fente 27. Ce corps annulaire fendu 26 a une paroi extérieure cylindrique circulaire 28, une extrémité amincie 29 où une dépression circulaire de contre-pression 30 est creusée le long de la bordure de cette paroi extérieure cylindrique, une extrémité élargie 32 munie d'un rebord radial plat, saillant vers l'extérieur 33, d'une lèvre radiale saillante vers l'intérieur 34 et de deux ergots axiaux de fixation en T diamétralement opposés 36, 37 formés sur le rebord radial 33, et un pont élastique 40 reliant les deux bouts 41, 42 du corps annulaire fendu 26 séparés par la fente 27, et ayant une force élastique prédéterminée.

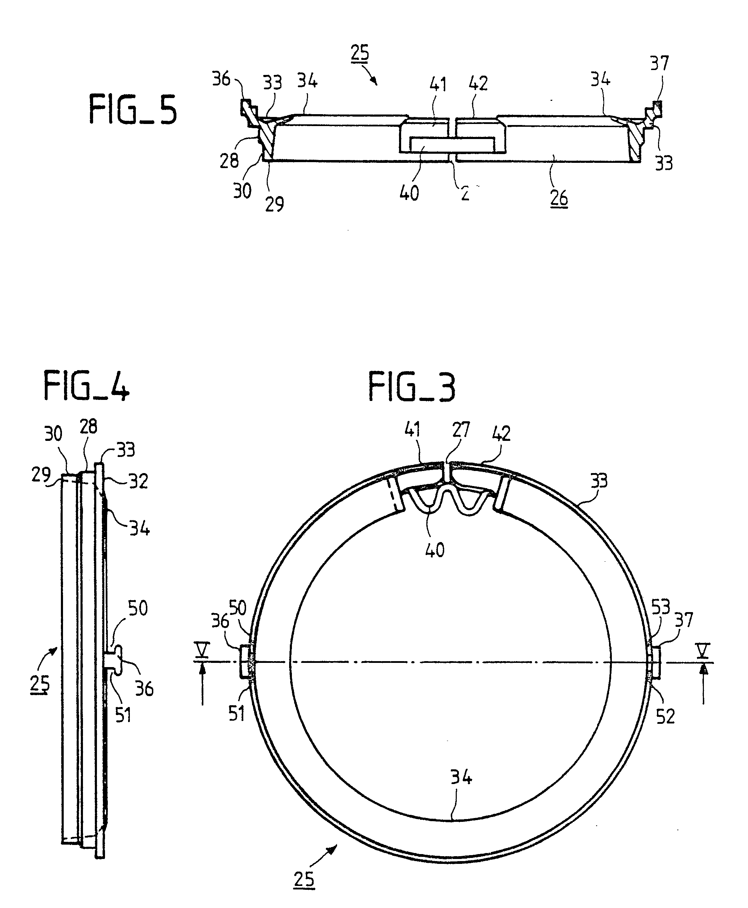

Dans l'exemple illustré (figure 3), le pont élastique 40 est constitué par une lame ondulée élastique. Ce pont 40 transmet par son expansion ou sa traction une élasticité prédéterminée au corps flexible annulaire fendu 26 du joint 25.

Dans le système de circulation forcée de liquide 1, le joint pour liquide 25 est monté dans la rainure 16 définie par les deux rebords axiaux circulaires concentriques 14, 15 du support tubulaire fixe 8 entre la collerette radiale 20 du bout tubulaire 19 du moyeu 18 du bras tournant d'arrosage 2 et le rebord axial extérieur 15 de ce support tubulaire fixe 8. Le joint 25 est fixé au moyeu 18 du bras tournant d'arrosage 2 et rendu solidaire en rotation de ce moyeu 18 par insertion dans des espaces 50, 51 et 52, 53 situés respectivement entre des bras des T des ergots axiaux de fixation 36, 37 et le rebord radial 33 du corps 26 du joint 25, des branches en U des languettes radiales 45, 46 (figures 1 et 2) formées aux deux points diamétralement opposés de la collerette radiale 20 de ce moyeu 18 du bras tournant d'arrosage 2.

Quand le bras tournant d'arrosage 2 est monté sur l'axe de rotation 12 du support fixe 8, et retenu en place par un écrou 54 vissé sur une extrémité filetée de cet axe de rotation 12, le rebord axial circulaire 21 du moyeu 18 du bras tournant d'arrosage 2 et le joint 25 porté par ce moyeu 18 sont alors logés dans la rainure circulaire 16 définie par les deux rebords axiaux circulaires concentriques 14, 15 du support fixe 8, et tournent avec le bras tournant d'arrosage 2 librement vis-à-vis du ce support fixe 8.

Durant le lavage et le rinçage effectués dans le lave-vaisselle, le système de circulation forcée de liquide 1 fonctionne et un courant de liquide sous pression, représenté par les flèches A, qui est refoulé par la pompe de recyclage à travers la tubulure 9 de cette pompe, le support tubulaire fixe 8 et le bras tournant d'arrosage 2, s'échappe par les trous de sortie de liquide 4, 5, 6, 7 de ce bras et arrose la vaisselle à laver ou à rincer. En s'échappant des trous 4, 5, 6, 7, le liquide sous pression fait tourner le bras d'arrosage 2. Une partie de ce liquide sous pression, représentée par des flèches B, pénètre à travers l'interstice circulaire en chicane 55 dans la rainure circulaire 16 du support 8, exerce une pression sur le joint 25 tournant avec le bras d'arrosage 2, et tend à l'appliquer contre la collerette radiale 20 du moyeu 18 du bras 2 et le rebord axial extérieur 15 du support fixe 8, par conséquent à empêcher une fuite libre de liquide à travers la jointure des moyeux tournant 18 et support fixe 8 et à éviter une création d'une source de bruit désagréable, une formation d'une mousse gênante et une baisse de rendement de fonctionnement du système 1.

Selon l'invention, si une pression prédéterminée du liquide refoulé est considérée comme bonne pour le lavage et le rinçage dans un lave-vaisselle, cette pression peut se révéler trop forte pour le joint 25 et risque de bloquer ce joint contre le rebord axial 15 du support fixe 8 et empêcher le bras d'arrosage 2, qui lui est solidaire, de tourner.

Pour cette raison, une dépression circulaire 30 est creusée dans le joint 25 le long de la bordure de la paroi extérieure 28 de son extrémité amincie 29 pour laisser pénétrer le liquide sous pression et y créer une contre-pression afin de contre-balancer, d'une manière prédéterminée, la pression exercée par ce même liquide sur la paroi intérieure de ce joint 25.

Une résultante préétablie entre, d'une part, la force élastique prédéterminée du pont élastique 40 du joint 25 et la pression prédéterminée exercée par le liquide refoulé, sur la paroi intérieure de ce joint 25 qui tendent dans l'exemple illustré à appliquer le joint 25 contre le rebord axial circulaire extérieur 15 du support fixe 8, et d'autre part, la contre-pression préétablie créée dans la dépression circulaire 30 de ce joint 25, permet de maintenir ce joint 25 dans une position d'équilibre apte à empêcher une fuite non contrôlée du liquide en circulation forcée, à travers la jointure des moyeux tournant 18 et support fixe 8 de ce bras, tout en laissant au joint 25 une libre rotation avec le bras d'arrosage 2. Durant le fonctionnement du système de circulation forcée de liquide 1, le joint 25 prend une position d'équilibre suivant laquelle la fente 27 qui le coupe sur toute sa hauteur, atteint aussi une largeur préétablie autorisant une fuite admise du liquide refoulé et favorisant une formation entre ce joint 25 et le rebord axial adjacent 15 du support fixe 8, d'un film de liquide qui sert de couche de lubrifiant. Une usure trop rapide ou prématurée du joint 25 est ainsi évitée.

Selon des solutions connues, un joint connu qui limite une fuite de liquide entre des parties tournantes et des parties fixes dans un système ayant des parties tournantes analogues au système de circulation forcée de liquide 1 est constituée par une pièce élastique annulaire fendue dont l'élasticité est déterminée par la nature de la matière qui forme le corps principale de cette pièce annulaire fendue, et non par un pont élastique 40 comme dans le cas du joint 25. Un tel joint connu est, selon sa structure, maintenu en place principalement par la force d'élasticité de son corps. Des matériaux qui n'ont pas une élasticité suffisante sont de ce fait exclus de la fabrication de ce joint connu. Un choix de matières pour la construction du joint 25, réalisé selon l'invention, est par contre relativement grand car grâce au pont élastique 40, le corps 26 du joint peut être réalisé avec une matière qui est relativement flexible.

Par ailleurs, la fixation du joint 25 au moyeu 18 du bras d'arrosage 2 n'est pas assurée par son pont élastique 40, mais par une interliaison mécanique "ergot en T et languettes à branches en U".

Pratiquement, il n y a pas de contact direct entre le joint tournant 25 et le support fixe 8 du bras d'arrosage 2 : l'usure du joint 25 se révèle insignifiante ou quasi nulle.

Durant son fonctionnement, un joint tournant connu dans un système où il est monté, est habituellement soumis pleinement à la pression du liquide refoulé qui exerce son action sans aucune contre-partie et l'appliquer fortement contre des parties fixes de ce système, ce qui explique son usure rapide ou prématurée constatée.

Dans le joint 25, le pont élastique 40 est réalisé avec une matière choisie parmi des matières différentes ou identiques à celle qui constitue le corps 26 du joint. Le joint 25 est de préférence constitué par une pièce réalisée en une matière synthétique moulée ou injectée.

Dans le système de circulation forcée de liquide 1, le rebord axial circulaire 21 du moyeu 18 a un diamètre intérieur prédéterminé légèrement supérieur au diamètre extérieur prédéterminé du rebord axial 14 du support 8 du bras tournant d'arrosage 2 de manière qu'après une mise en place du bras d'arrosage 2 sur son axe de rotation 12 et un blocage de l'écrou 54, le bras d'arrosage 2, son moyeu 18 et le joint 25 peuvent tourner autour de l'axe 12 librement vis-à-vis du support fixe 8 du ce bras 2.

Selon cette structure du système 1, le courant de liquide refoulé représenté par des flèches A, qui traverse le support tubulaire 8, le bout tubulaire du moyeu 18 du bras 2 ne pénètre dans la rainure circulaire 16 où est logé le joint 25 qu'une faible quantité à travers l'interstice circulaire en chicane prédéterminée 55 de la barrière définie par les rebords axiaux circulaires 14 et 21 respectifs du support fixe 8 et du moyeu 18 du bras tournant d'arrosage 2, en emboîtement concentrique (figure 2).

Cette faible quantité de liquide sous pression pénétrant dans la rainure annulaire 16 est facilement contrôlée par le joint 25. Une fuite tolérée de liquide entre le joint 25 et le support fixe 8 est ainsi réduite à une valeur insignifiante.

Le système de circulation forcée de liquide 1 présente ainsi un excellent rendement de fonctionnement, ne créent pas une source de bruit désagréable et ne produit pas une mousse abondante et gênante dans un lave-vaisselle.

**Revendications**

1. Joint pour liquide dans un système ayant des parties tournantes, caractérisé en ce qu'il comprend un corps flexible annulaire (26), ouvert sur toute sa hauteur par une fente (27) et muni d'un pont élastique (40) reliant les deux bouts (41, 42) de ce corps séparés par cette fente.

2. Joint selon la revendication 1, caractérisé en ce qu'il comprend un corps annulaire fendu (26) ayant une paroi extérieure cylindrique circulaire (28), une extrémité amincie (29) pourvue d'une dépression circulaire de contre-pression (30) creusée dans le long de la bordure de cette paroi extérieure cylindrique (28), une extrémité élargie (32) munie d'un rebord radial plat saillant vers l'extérieur (33) d'une lèvre radiale saillante vers l'intérieur (34), et de deux ergots axiaux de fixation en T diamètralement opposés (36, 37) formés sur ce rebord radial plat (33).

3. Joint selon la revendication 1, caractérisé en ce que le pont élastique (40) reliant les deux bouts (41, 42) du corps annulaire fendu (26) du joint (28) est constitué par une lame ondulée élastique dont l'élasticité est prédéterminée.

4. Joint selon une des revendications 1 à 3, caractérisé en ce que le pont élastique (40) reliant les deux bouts (41, 42) du corps annulaire fendu (26) du joint (25) est réalisé avec une matière identique à celle constituant le corps (26) de ce joint.

5. Joint selon l'une des revendications 1 à 3, caractérisé en ce que le pont élastique (40) reliant les deux bouts (41, 42) du corps annulaire fendu (26) du joint (25) est réalisé avec une matière différente de celle constituant le corps (26) de ce joint.

6. Joint selon l'une des revendications 1 à 5, caractérisé en ce qu'il est constitué par une pièce en une matière synthétique moulée ou injectée.

7. Système ayant des parties tournantes tel qu'un système de circulation forcée de liquide (1) à bras tournant d'arrosage (2) dans un lave-vaisselle, muni d'une pompe de recyclage envoyant un courant de liquide sous pression vers ce bras tournant d'arrosage à travers un support tubulaire fixe (8) de ce bras et un bout tubulaire tournant d'un moyeu (18) de ce bras tournant (2), d'une pompe de vidange, et d'un joint pour liquide (25) selon l'une des revendications 1 à 6, disposé entre ce support tubulaire fixe (8) et ce bout tubulaire du moyeu (18) de ce bras tournant d'arrosage, caractérisé en ce qu'il comprend au niveau de la jointure des support-tubulaire fixe (8) et bout tubulaire du moyeu (18) du bras tournant d'arrosage (2), une barrière avec un interstice circulaire en chicane (55) disposée entre le joint pour liquide (25) et le courant de liquide sous pression (A) envoyé par la pompe de recyclage vers le bras tournant d'arrosage (2).

8. Système selon la revendication 7, caractérisé en ce qu'il comprend, d'une part, un support tubulaire fixe (8) du bras tournant d'arrosage (2), pourvu dans son extrémité opposée à celle en contact avec une tubulure de refoulement (9) de la pompe de recyclage, d'un moyeu central (11) portant un axe de rotation (12) du bras d'arrosage (2) et de deux rebords axiaux circulaires saillants espacés, concentriques (14, 15) définissant entre eux une rainure circulaire (16) pour loger le joint pour liquide (25), et d'autre part, un moyeu (18) du bras tournant d'arrosage (2) ayant à son extrémité adjacente au support tubulaire fixe (8) un bout tubulaire (19) muni d'un rebord axial circulaire saillant (21) en emboîtement dans la rainure circulaire (16) du support tubulaire fixe (8) et créant avec le rebord adjacent (14) de ce support (8) une barrière avec un interstice circulaire en chicane (55) disposée entre le courant de liquide sous pression (A) envoyé à la pompe de recyclage, et le joint pour liquide (25) logé dans cette rainure circulaire (16), et d'une collerette radiale circulaire (20) sur laquelle est fixé le joint pour liquide (25)

9. Système selon l'une des revendications 7 et 8, caractérisé en ce que le bras tournant d'arrosage (2) comprend en deux points diamétralement opposés de la collerette radiale circulaire (20) de son moyeu (8), deux languettes radiales (45, 46) dont les branches en U sont insérées dans des espaces (50, 51 et 52, 53) situés respectivement entre des bras des T des ergots axiaux de fixation (36, 37) et un rebord radial (33) du joint pour liquide (25), lors d'une fixation de ce joint (25) au moyeu (18) de ce bras tournant d'arrosage (2).

10. Système selon l'une des revendications 7 à 9, caractérisé en ce que la force élastique du pont élastique (40) du joint (25), la pression exercée par le liquide sous pression envoyé par la pompe de recyclage sur la paroi intérieure du joint (25) et la contre-pression créée dans la dépression (30) de ce joint (25), sont prédéterminées et leur résultante donne à ce joint (25) durant le fonctionnement du système (1), une position d'équilibre apte à empêcher une fuite non contrôlée du liquide en circulation forcée à travers la jointure des moyeux (18) du bras tournant d'arrosage (2) et support fixe (8) de ce bras, et à laisser ce joint (25) tourner librement avec ce bras d'arrosage (2).

## FIG_1

## FIG_2

# FIG_5

25

36 33 34  41 42  34 37

28 30 29  40 2 26 33

# FIG_4

30 28
29 33
32
34
50
25 36
51

# FIG_3

41 27 42

33

36 50 53 37

51 52

34

25

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 599 872  (L.W. GUTH) <br> * Colonne 5, ligne 18 - colonne 6, ligne 41; figures 3-7 * <br> --- | 1 | A 47 L  15/23 <br> F 16 J   9/00 <br> F 16 J  15/32 |
| A | EP-A-0 172 535  (BAUKNECHT) <br> * Page 6, paragraphe 1 - page 11, paragraphe 1; figures 1-3 * <br> ----- | 1 | |

DOMAINES TECHNIQUES
RECHERCHES (Int. Cl.4)

A 47 L
F 16 J

**Le présent rapport a été établi pour toutes les revendications**

| Lieu de la recherche | Date d'achèvement de la recherche | Examinateur |
|---|---|---|
| LA HAYE | 29-06-1989 | LEGER M.G.M. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant